Europäisches Patentamt

European Patent Office

Office européen des brevets

(11) Numéro de publication: **0 183 614**
A1

# (12) DEMANDE DE BREVET EUROPEEN

(21) Numéro de dépôt: 85402275.3

(22) Date de dépôt: 22.11.85

(51) Int. Cl.⁴: **B 65 D 83/02**

(30) Priorité: 23.11.84 FR 8417851

(43) Date de publication de la demande:
04.06.86 Bulletin 86/23

(84) Etats contractants désignés:
AT BE CH DE GB IT LI LU NL SE

(71) Demandeur: DUFFOUR ET IGON S.A. (D.I.)
Rue de l'Oasis B.P. 3084
F-31025 Toulouse Cedex(FR)

(72) Inventeur: Vigneau, Jean-Louis
Montegut Plantaurel
F-09120 Varilhes(FR)

(74) Mandataire: Chameroy, Claude et al,
c/o Cabinet Malemont 42, avenue du Président Wilson
F-75116 Paris(FR)

(54) Etui distributeur.

(57) Etui distributeur constitué d'un réceptacle pour des objets à distribuer un par un (10, 11, 12, 13), pourvu d'un moyen d'introduction des objets et d'un orifice de distribution de section légèrement supérieure à la section de sortie des objets, caractérisé par la présence d'au moins une chambre de concentration dont la paroi latérale est une surface assimilable à une surface cylindrique, chambre placée à l'intérieur du réceptacle en amont de l'orifice, et dont la section au voisinage de l'orifice est intermédiaire entre celles de l'orifice et du réceptacle.

EP 0 183 614 A1

## ETUI DISTRIBUTEUR

L'invention porte sur un étui distributeur constitué d'un réceptacle pour des objets à distribuer un par un, pourvu d'un moyen d'introduction des objets et d'un orifice de distribution.

Il existe de nombreux étuis distributeurs de ce genre, principalement pour des objets de forme compacte, par exemple sphériques, ou au contraire pour des objets longs, par exemple cylindriques.

L'orifice de distribution présente une section de passage, le plus souvent circulaire, qui est dimensionnée pour permettre la sortie d'un objet et non de deux. S'agissant d'objets sphériques ou cylindriques, le diamètre d de l'orifice peut être par exemple égal à 1,2 à 1,5 fois celui D d'un grand cercle de la sphère ou d'une section du cylindre.

Si les objets à distribuer ont une section complexe, il va de soi que le diamètre d est déterminé par le diamètre D du plus petit cercle dans lequel cette section peut s'inscrire.

Les objets de forme allongée sont le plus souvent assimilables à un cylindre à partir d'une hauteur h minimale, mais comme ils peuvent ne pas se présenter perpendiculairement au plan de sortie, c'est l'ellipse formée par l'intersection de l'objet et ce plan dont la plus grande dimension doit être légèrement supérieure à d.

Après avoir dégagé l'orifice de sortie, s'il est pourvu d'une fermeture, l'utilisateur retourne l'étui pour placer l'orifice en partie basse et, si nécessaire, secoue légèrement. L'objet s'échappe alors et peut être recueilli. Tout au moins devrait-il en aller ainsi.

Il est bien connu en effet que de tels étuis ne sont pas dépourvus d'inconvénients.

En début d'utilisation, les objets, nombreux et donc serrés, n'ont pas la mobilité nécessaire pour que l'un d'entre eux se présente rapidement au droit de l'orifice et s'échappe. Au contraire, en fin d'utilisation, les quelques objets restant dans l'étui se déplacent librement en tous lieux et ce n'est que par hasard si l'un d'entre eux se présente, au bout d'un temps quelquefois très long, devant l'orifice.

En fait, les étuis distributeurs connus ne sont commodes et agréables à utiliser qu'à mi-usage. Ils sont incommodes et pratiquement inutilisables en début et en fin d'usage.

Encore n'est-il pas fait mention jusqu'à présent d'une autre source de difficultés, qui est à voir dans la possibilité, selon la forme du réceptacle et des objets, que ces derniers se coincent en amont de l'orifice.

C'est pourquoi les étuis distributeurs, malgré leur intérêt évident, sont loin d'être d'un usage courant.

L'invention a pour objet de remédier à ces inconvénients et pour ce faire, elle vise un étui distributeur qui se caractérise par la présence d' au moins une chambre de concentration dont la paroi latérale est une surface assimilable à une surface cylindrique, chambre placée à l'intérieur du réceptacle en amont de l'orifice, et dont la section au voisinage de l' orifice est intermédiaire entre celles de l'orifice et du réceptacle.

Avantageusement, les parois de la chambre de concentration et de l' orifice ont au moins une génératrice commune.

Grâce à ces dispositions, à quelque stade que ce soit de l'utilisation de l'étui, même s'il est pratiquement plein ou presque vide, quelques objets en petit nombre occupent la chambre de concentration au moment où l'un d'entre eux doit s'échapper.

Par exemple, si la section de cette chambre est de l'ordre du quadruple de la section de l'orifice, elle-même légèrement supérieure à la section de passage des objets, on trouvera dans la chambre deux objets compacts, ou l'extrémité de deux objets longs.

Quand l'utilisateur a renversé et si nécessaire secoué légèrement l'étui, l'un des deux va obligatoirement et sans risque d'être coincé se trouver au droit de l'orifice et s'échapper facilement le long de la génératrice commune de la chambre et de l'orifice.

Selon un premier mode de réalisation de l' invention, il est prévu au moins deux chambres de concentration cylindriques à sections croissantes, la plus petite étant disposée en amont de l'orifice .

S'agissant d' un étui distributeur pour la distribution d'objets cylindriques relativement longs, dont le réceptacle est un tube fermé à ses deux extrémités, l'une des extrémités peut être fermée par un bouchon à jupe cylindrique dont le fond porte l'orifice de sortie, et il peut être prévu en amont de cet orifice plusieurs chambres cylindriques en escalier.

Le phénomène décrit plus haut se produit ainsi en cascade entre le réceptacle et la dernière chambre, puis entre celle-ci et la précédente, et ainsi de suite jusqu'à la première, les objets passant donc successivement d'une chambre à l'autre sans risque de coincement.

Selon un autre mode de réalisation de l' invention, la chambre de concentration possède une paroi latérale dont la génératrice est une courbe en colimaçon hélicoïdale s' étendant de l' orifice à la paroi du réceptacle, et un fond constitué par une rampe hélicoïdale limitée par cette même courbe.

Cette disposition présente l' avantage d' une mise en oeuvre plus écononomique par exemple lorsque la fabrication a lieu par enlèvement de matière.

Deux exemples d' étuis distributeurs conformes à l'invention sont maintenant décrits en référence aux dessins annexés dans lesquels :

- la figure 1 est une vue en perspective à échelle réduite d'un étui distributeur conforme à l'invention lors de son utilisation,

- la figure 2 est une vue en coupe longidinale de la partie inférieure de l'étui,

- la figure 3 est une autre vue en coupe selon la ligne III-III de la figure 2,

- les figures 4, 5 et 6 illustrent les phases successives d'utilisation,

- la figure 7 est une vue extérieure partielle d'un bouchon à rampe hélicoïdale, et

-les figures 8 et 9 sont des vues en coupe longitudinale et transversale du même bouchon.

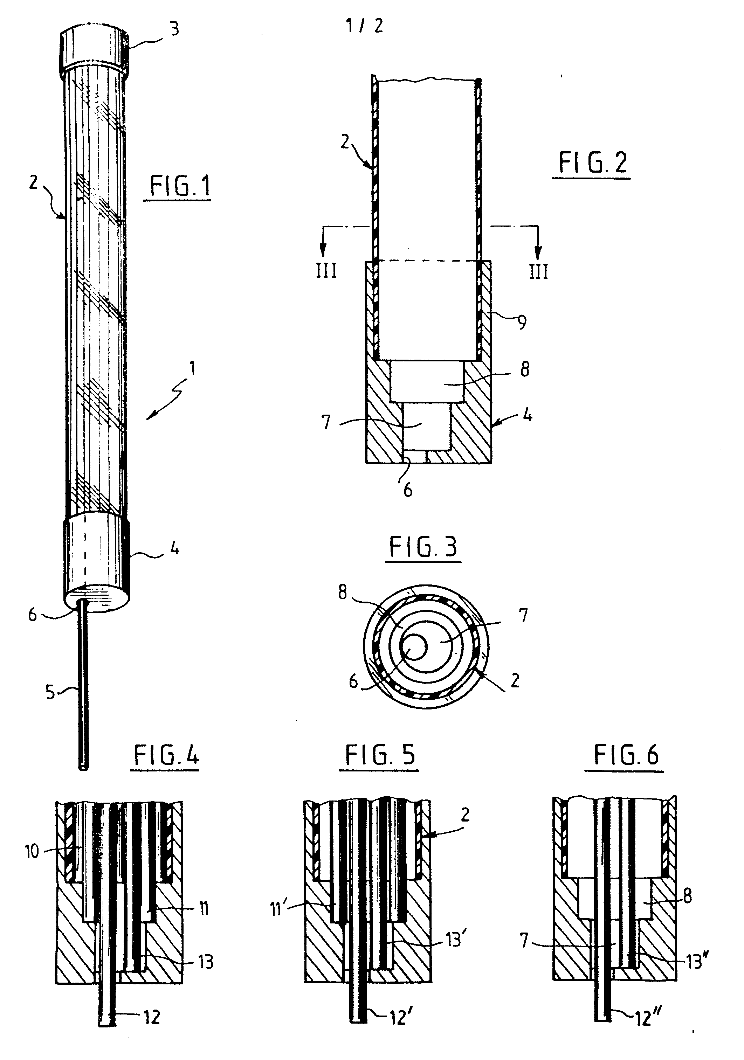

L'étui distributeur représenté aux figures 1 à 6 est un réceptacle 1 constitué par un tube 2, ici transparent, et deux bouchons 3 et 4.

Dans l'exemple choisi, il s'agit d'un étui pour des objets cylindriques longs 5 qui sont des baguettes de soudure ayant un diamètre de 4 millimètres et une longueur d'une quarantaine de centimètres. Le bouchon 3 peut servir au remplissage si l'on préfère ne pas toucher au bouchon 4 qui porte l'orifice de sortie 6, de section circulaire d'un diamètre de 6 millimètres.

Comme on le voit mieux aux figures 2 et 3, le bouchon 4 comprend successivement une première chambre 7, une seconde chambre 8 et une jupe 9 qui sert à le solidariser avec le tube. Les diamètres des chambres sont respectivement d'environ 12 et 18 millimètres, c'est-à-dire intermédiaires entre celui de l'orifice 6 (6 millimètres) et celui du tube 2 (24 millimètres).

Les hauteurs des chambres sont suffisantes pour que l'extrémité des baguettes qui s'y trouve y demeure même si l'étui est légèrement secoué.

L'orifice 6 et la chambre 7 ont une génératrice commune visible sur la partie gauche de la figure 2.

La figure 4 montre comment fonctionne l'étui distributeur qui vient d'être retourné pour en extraire une baguette lorsqu'il est plein ou à peu près plein. On trouve alors des baguettes reposant par leurs extrémités soit au fond du réceptacle en 10, soit sur le fond de la chambre 8 en 11, soit sur le fond de la chambre 7 en 12 et 13.

Mais, compte tenu des dimensions de cette chambre 8, de l'orifice 6 et des baguettes 12 et 13, sans même secouer l'étui, l'une des baguettes 12 ou 13 se trouve obligatoirement face à l'orifice 6 et s'échappe, car elle ne saurait être coincée par sa voisine 13, ni plus haut par les baguettes de types 10 et 11.

La figure 5 illustre comment fonctionne l'étui à mi-usage. Il n'y a alors plus de baguettes de type 10 sur le fond du réceptacle puisqu'elles sont tombées dans la chambre 8, mais pour le reste rien n'est changé. Les baguettes restantes sont en 11', 12' et 13', et la baguette 12' s'échappe aussi facilement que la première 12.

Il en va ainsi jusqu'à l'avant-dernière baguette 12" de la figure 6 qui montre le fonctionnement de l'étui en fin d'utilisation. A leur tour, les baguettes de type 11' sont tombées une à une dans la chambre 7, et les deux dernières 12" et 13" vont s'échapper sans difficulté.

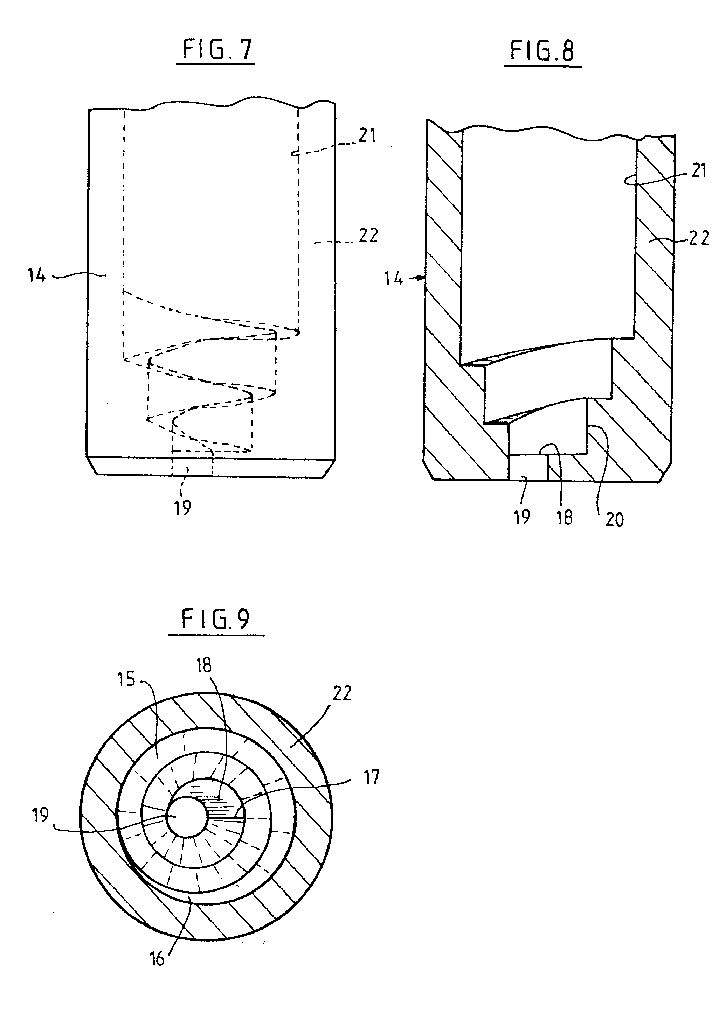

Le bouchon 14 représenté aux figures 7, 8 et 9 peut se substituer au bouchon 4 décrit ci-dessus. Sa chambre de concentration est limitée par un fond 15 bordé par une courbe hélicoïdale en colimaçon, fond qui, au niveau du réceptacle, comporte une plage 16 de largeur décroissante, et qui vient se raccorder en 17 à une plage 18 perpendiculaire à l'embouchure de l'orifice 19. Il est à noter cependant que cette structure particulière des plages 16 et 18 n'est nullement obligatoire et a été choisie pour des raisons de facilité de fabrication.

La paroi latérale 20 de la chambre de concentration est une surface cylindrique parallèle à l'axe du bouchon dont la génératrice est la courbe hélicoïdale en colimaçon qui borde intérieurement le fond 15. Cette paroi 20 vient donc se raccorder à la paroi 21 de la jupe 22 du bouchon à l'extrémité de la plage 16. Elle disparait au niveau de la ligne 17 de raccordement à la plage 18.

Il est aisé de réaliser que ce bouchon 14 se comporte à l'usage de façon tout à fait semblable à ce qui a été décrit pour le bouchon 4 en regard des figures 4, 5 et 6. Au fur et à mesure que le réceptacle se vide, les objets à distribuer glissent sur la rampe 15 ou sautent d'un étage à l'autre de cette rampe, mais sans risque de coincement puisque la paroi 20 est partout parallèle à elle même et à la paroi du réceptacle. Au niveau de la plage 18 ne peuvent se trouver qu'un très petit nombre d'objets dont l'un atteindra certainement l'orifice 19.

REVENDICATIONS

1. Etui distributeur constitué d' un réceptacle (1) pour des objets à distribuer un par un (5), pourvu d'un moyen (3) d'introduction des objets et d'un orifice de distribution (6) de section légèrement supérieure à la section de sortie des objets, caractérisé par la présence d' au moins une chambre de concentration (7) dont la paroi latérale est une surface assimilable à une surface cylindrique, chambre placée à l'intérieur du réceptacle (1) en amont de l'orifice (6), et dont la section au voisinage de l' orifice est intermédiaire entre celles de l'orifice et du réceptacle.

2. Etui distributeur selon la revendication 1, les parois de la chambre de concentration et de l' orifice ont au moins une génératrice commune.

3. Etui distributeur selon la revendication 1 ou la revendication 2, caractérisé par la présence d' au moins deux chambres de concentration cylindriques(7,8) à sections croissantes, la plus petite étant disposée en amont de l'orifice (6).

4. Etui distributeur selon la revendication 3 pour la distribution d'objets cylindriques relativement longs (5), dont le réceptacle est un tube (2) fermé à ses deux extrémités, caractérisé en ce que l'une des extrémités est fermée par un bouchon (4) à jupe cylindrique (9) dont le fond porte l'orifice de sortie (6) et qui comporte en amont plusieurs chambres cylindriques (7, 8) en escalier.

5. Etui distributeur selon la revendication 1 ou la revendication 2, caractérisé en ce que la chambre de concentration possède une paroi latérale (20) dont la génératrice est une courbe en colimaçon hélicoïdale s' étendant de l' orifice (19) à la paroi (21) du réceptacle, et un fond (15) constitué par une rampe hélicoïdale limitée par cette même courbe.

0183614

FIG.1

FIG.2

FIG.3

FIG.4

FIG.5

FIG.6

## FIG. 7

21

22

14

19

## FIG. 8

21

22

14

19  18  20

## FIG. 9

15   18

22

19

17

16

**0183614**

Numero de la demande

**RAPPORT DE RECHERCHE EUROPEENNE**

Office européen
des brevets

EP 85 40 2275

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| A | US-A-1 744 195 (ALLAND)<br>* Page 1, lignes 42-52 et 85-100 * | 1,2,4 | B 65 D 83/02 |
| A | US-A-2 425 560 (PURDY)<br>* Colonne 1, ligne 40 - colonne 2, ligne 8; figures 1-5 * | 1,5 | |
| A | FR-A-2 122 985 (RHEINISCHE NADELFABRIKEN) | | |

DOMAINES TECHNIQUES
RECHERCHES (Int. Cl.4)

B 65 D
B 25 H
A 24 F

Le present rapport de recherche a ete etabli pour toutes les revendications

| Lieu de la recherche<br>LA HAYE | Date d achèvement de la recherche<br>24-02-1986 | Examinateur<br>VANTOMME M.A. |
|---|---|---|